# FASCICULE DE BREVET EUROPEEN

(11) **EP 4 359 240 B1**
(45) Date de publication et mention de la délivrance du brevet: **06.08.2025**
(21) Numéro de dépôt: 22730944.0
(22) Date de dépôt: 22.06.2022
(51) Int. Cl.: B60K 11/02, B60K 17/04

(54) **GROUPE MOTOPROPULSEUR D'UN VÉHICULE ÉLECTRIQUE AYANT UN RÉDUCTEUR DE VITESSE AU RENDEMENT AMÉLIORÉ**
ANTRIEBSEINHEIT EINES ELEKTROFAHRZEUGS MIT EINEM GETRIEBE MIT VERBESSERTEM WIRKUNGSGRAD
DRIVE ASSEMBLY OF AN ELECTRIC VEHICLE WITH A GEARBOX WITH IMPROVED EFFICIENCY

(30) Priorité: 24.06.2021 FR 2106745
(43) Date de publication de la demande: 01.05.2024
(73) Titulaire: Ampere SAS, 92100 Boulogne-Billancourt (FR)
(72) Inventeur: LASSEUR, Bertrand, 78084 Guyancourt (FR)
(74) Mandataire: Renault Group
(86) Numéro de dépôt international: PCT/EP2022/066966
(87) Numéro de publication internationale: WO 2022/268858

(56) Documents cités:
- WO-A1-2021/042465
- CN-A- 110 224 534
- DE-A1- 102019 201 488
- US-A1- 2021 095 649

## Description

La présente invention concerne un groupe motopropulseur d'un véhicule électrique ayant un réducteur de vitesse au rendement amélioré.

Dans le cadre de l'invention, les véhicules possédant un tel groupe motopropulseur sont des véhicules électriques ou hybrides.

Ces groupes motopropulseurs sont communément équipés :
- d'un moteur électrique,
- d'une électronique de puissance qui distribue le flux d'énergie électrique vers la machine,
- d'un réducteur de vitesse.

Les documents US 2021/095649 A1, CN 110 224 534 A, WO 2021/042465 A1, DE 10 2019 201488 A1 divulguent respectivement un groupe motopropulseur similaire.

Les solutions existantes permettant d'améliorer le rendement du réducteur de vitesse sont les suivantes :
- Diminution du volume d'huile brassée par les engrenages du réducteur, par dérivation et stockage de l'huile durant le fonctionnement,
- Mise en place d'une pompe à huile pour une lubrification sous pression ou par relevage. Une telle solution permet d'assurer une lubrification correcte tout en réduisant le volume d'huile brassée nécessaire au fonctionnement du réducteur,
- Mise en place d'un thermo- management par addition d'un échangeur dans la boucle du circuit d'huile afin de chauffer l'huile pour réduire sa viscosité et ainsi diminuer les pertes par brassage.

Or, la mise en œuvre d'une pompe à huile et/ou d'un échangeur thermique est coûteuse et a tendance à alourdir le véhicule. De plus, la présence de ces éléments accroit l'encombrement interne du véhicule.

Un groupe motopropulseur selon l'invention permet d'améliorer le rendement du réducteur de vitesse en s'affranchissant des inconvénients rencontrés dans l'état de la technique.

L'invention a pour objet un groupe motopropulseur d'un véhicule électrique comprenant un moteur électrique et un réducteur de vitesse comprenant une couronne de différentiel.

Selon l'invention, le réducteur de vitesse comprend un organe de distribution destiné à récupérer de l'huile qui est projetée par la couronne de différentiel, le groupe motopropulseur comprenant un disque creux de circulation d'huile placé entre des faces d'accouplement du moteur et du réducteur, ledit disque étant doté d'un orifice d'entrée et d'un orifice de sortie d'huile en communication avec le réducteur, l'une des faces dudit disque creux étant en contact avec une face d'une chambre de refroidissement du moteur électrique, et l'organe de distribution créant un premier flux d'huile vers l'orifice d'entrée du disque creux afin d'alimenter en huile ledit disque creux. Le principe d'un groupe motopropulseur selon l'invention, consiste à récupérer une partie de l'huile projetée par la couronne de différentiel grâce à un organe de distribution d'huile positionné dans le réducteur. Cet organe de distribution crée un premier flux d'huile vers le disque creux qui est doté de deux orifices calibrés, l'orifice d'entrée et l'orifice de sortie. De cette manière, il devient possible de mettre une quantité d'huile dans le réducteur qui garantisse une bonne lubrification au démarrage, et de faire baisser la quantité d'huile progressivement quand cette lubrification est établie. De plus, l'huile qui circule dans le disque creux, va être réchauffée par les calories à dissiper dans la paroi de refroidissement qui a été préalablement chauffée par le moteur électrique, et va ainsi réduire la viscosité de l'huile. Au travers de ces deux actions, le système mis en place dans le groupe motopropulseur permet d'améliorer le rendement du réducteur. Préférentiellement, l'organe de distribution est une pièce solide profilée, apte à récupérer l'huile projetée par la couronne de différentiel et à la redistribuer notamment vers le disque creux de circulation d'huile. La circulation d'huile entre le réducteur et le disque creux est assurée par un circuit fermé entre ledit réducteur et ledit disque creux. Le moteur comprend classiquement un rotor et un stator. Le moteur électrique peut indifféremment être refroidi par ses faces latérales ou sur sa périphérie.

Selon une caractéristique possible de l'invention, l'organe de distribution est placé dans une zone supérieure du réducteur de vitesse, l'orifice de sortie étant placé sous l'orifice d'entrée, de sorte que l'huile transite par gravité dans le disque creux entre l'orifice d'entrée et l'orifice de sortie. De cette manière, il n'est nullement besoin d'ajouter un appareillage spécifique, tel que par exemple une vanne ou une pompe, pour forcer la circulation de l'huile dans le disque creux entre l'orifice d'entrée et l'orifice de sortie.

Selon une caractéristique possible de l'invention, le disque creux est annulaire, la face de refroidissement étant une face d'un disque annulaire de refroidissement dans lequel circule un liquide de refroidissement, les deux disques étant coaxiaux et placés au contact l'un de l'autre. Les deux disques présentent chacun une ouverture centrale, préférentiellement circulaire pour permettre le passage d'un axe du rotor. Chacun des disques présente ainsi une chambre annulaire, l'une destinée à la circulation d'un fluide de refroidissement pouvant par exemple être de l'eau, l'autre étant dédiée à la circulation d'huile.

Selon une caractéristique possible de l'invention, le diamètre du disque de circulation d'huile et le diamètre du disque de circulation du liquide de refroidissement sont sensiblement égaux. Cet arrangement permet de dimensionner au plus juste le disque creux de circulation d'huile de façon à ce que la totalité d'une face circulaire délimitant ledit disque creux soit au contact d'une face circulaire du disque creux de circulation du fluide de refroidissement, afin de bénéficier, de façon optimisée, d'un réchauffement par ledit fluide de refroidissement.

Selon une caractéristique possible de l'invention, le disque creux de circulation d'huile et le disque creux de circulation de liquide de refroidissement sont préalablement assemblés pour constituer un disque résultant rapporté, pouvant être directement intégré dans ledit groupe motopropulseur. Ce disque résultant peut ainsi être fabriqué dans un lieu à part, puis être ensuite acheminé le long d'une chaine d'assemblage pour le montage d'un véhicule, sans avoir à être montée dans le véhicule de façon divisée. Un tel disque résultant ne présente de l'intérêt que si la chambre de refroidissement n'existe pas au niveau du moteur. Il permet de recréer cette chambre de refroidissement en la plaçant au contact du disque de circulation d'huile.

Selon une caractéristique possible de l'invention, le diamètre de l'orifice d'entrée est supérieur au diamètre de l'orifice de sortie d'huile. Cette configuration permet de limiter l'évacuation de l'huile du disque creux.

Selon une caractéristique possible de l'invention, une électrovanne de pilotage est placée au niveau de l'orifice de sortie d'huile du disque de circulation d'huile de façon à gérer la circulation d'huile dans le disque en régime non stabilisé. L'objectif de la mise en place de cette électrovanne est de permettre un pilotage du remplissage / vidange du disque creux de circulation d'huile, et ainsi de maitriser le niveau d'huile dans le réducteur pour toutes les conditions de roulages. En effet, un simple calibrage des orifices entrée et de sortie du disque creux permet uniquement de gérer le niveau d'huile en régime stabilisé. L'exemple le plus explicite est sur un roulage en ville. Dès que le véhicule est sur des phases à l'arrêt, ou à vitesse lente, le débit d'huile en entrée devient faible ou nul. Le véhicule à l'arrêt implique que la couronne de différentiel ne projette plus d'huile. Le disque creux de circulation d'huile se vide, et il y aura de nouveau un volume d'huile plus important que nécessaire dans le réducteur au redémarrage. Ceci génèrera des pertes par frottement. On retrouve ce phénomène sur un profil de route type montagne ou petite route de campagne avec une vitesse véhicule qui varie de façon importante. Les virages et la pente vont également influer sur le débit huile en entrée du disque creux. L'état non stabilisé dû à ces profils de routes engendrent une vidange par gravité dans le disque creux et un volume d'huile plus important que souhaité dans le réducteur. D'où l'intérêt d'un pilotage par électrovanne.

Selon une caractéristique possible de l'invention, l'organe de distribution est une pièce mécanique profilée présentant un orifice placé dans la continuité de l'orifice d'entrée d'huile.

Selon une caractéristique possible de l'invention, l'organe de distribution comprend une multiplicité de premiers orifices destinés à créer un deuxième flux d'huile vers des engrenages ou autres composants.

Selon une caractéristique possible de l'invention, l'organe de distribution permet de créer un troisième flux d'huile vers des composants internes du réducteur par un débordement de l'huile dudit organe de distribution.

Un groupe motopropulseur selon l'invention présente l'avantage d'être dimensionné pour améliorer le rendement du réducteur sans avoir recours, ni à une pompe à huile, ni à un échangeur, grâce à l'instauration judicieuse d'un circuit d'huile bénéficiant d'un réchauffement par un circuit de refroidissement du moteur électrique. Il a de plus l'avantage d'améliorer le rendement du réducteur, sans accroitre, ni son poids, ni son encombrement.

On donne ci-après une description détaillée d'un mode de réalisation préféré d'un groupe motopropulseur selon l'invention en se référant aux figures suivantes :
[Fig. 1] représente une vue schématique d'un groupe motopropulseur de l'état de la technique, dont le moteur électrique est refroidi par ses faces latérales
[Fig. 2] représente une vue schématique d'un groupe motopropulseur selon l'invention, dont le moteur électrique est refroidi par ses faces latérales
[Fig. 3] représente une vue en perspective d'un disque creux de circulation d'huile du groupe motopropulseur de la figure 2,
[Fig. 4] représente une vue schématique d'un groupe motopropulseur de l'état de la technique, dont le moteur électrique est refroidi sur sa périphérie,
[Fig. 5] représente une vue schématique d'un groupe motopropulseur selon l'invention, dont le moteur électrique est refroidi sur sa périphérie,
[Fig. 6] représente une vue en perspective d'un ensemble d'un disque creux de circulation d'huile et d'un disque creux de circulation d'un fluide de refroidissement du groupe motopropulseur de la figure 5,
[Fig. 7] représente une vue en perspective d'un organe de distribution d'huile d'un groupe motopropulseur selon l'invention,
[Fig. 8] représente de côté de l'organe de distribution de la figure 7.

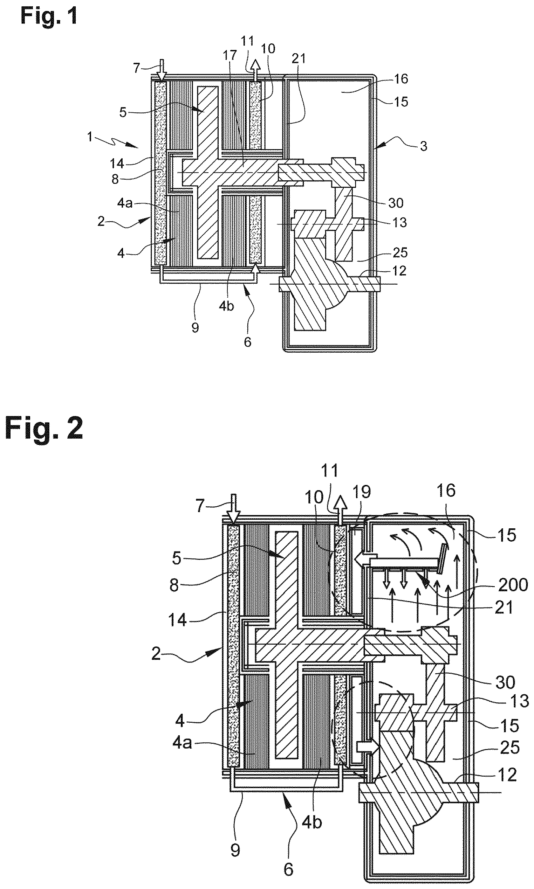

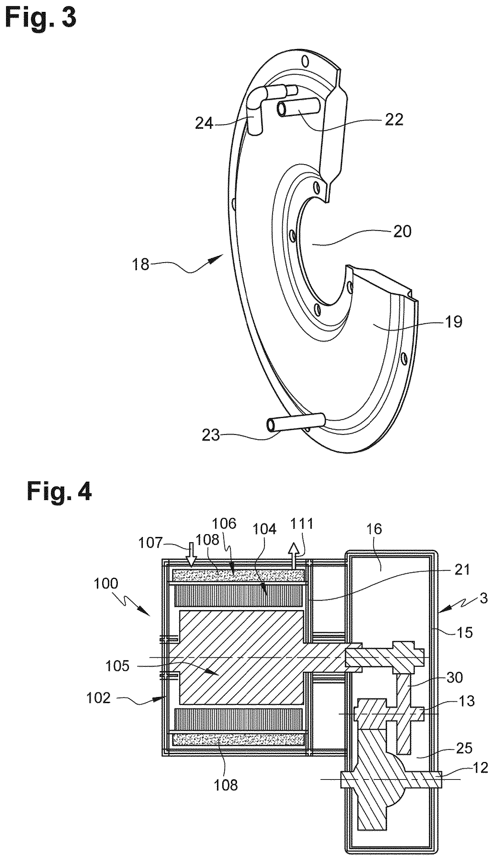

En se référant aux figures 1 et 4, un groupe motopropulseur 1, 100 d'un véhicule électrique ou hybride comprend schématiquement un moteur électrique 2, 102 et un réducteur 3 de vitesse, ledit moteur électrique 2, 102 étant conventionnellement doté d'un stator 4, 104, d'un rotor 5, 105 et d'un circuit de refroidissement 6, 106. Le réducteur 3 comprend conventionnellement une couronne de différentiel 30

En se référant à la figure 1, un premier mode de réalisation d'un groupe motopropulseur 1 selon l'invention, comprend un moteur électrique 2 à flux axial, revêtant la forme d'une galette. Il s'agit d'un moteur électrique 2 de type stator/rotor/stator. Le refroidissement du moteur 2 électrique est réalisé avec un fluide de refroidissement qui peut par exemple être de l'eau, ledit refroidissement étant réalisé par un circuit de refroidissement 6 via ses faces latérales. Le circuit de refroidissement 6 comprend une entrée 7 débouchant dans une première chambre 8 de forme cylindrique et accolée à un premier stator 4a, une tubulure de liaison 9 extérieure au moteur électrique 2 et reliant ladite première chambre 8 à une deuxième chambre 10 de forme annulaire, et une sortie 11 prenant naissance sur la deuxième chambre 10 et acheminant le fluide de refroidissement vers l'extérieur du moteur 2. La deuxième chambre 10 est accolée à un deuxième stator 4b, ladite première chambre 8 et ladite deuxième chambre 10 ayant sensiblement le même diamètre et étant disposées dans le moteur électrique de sorte que leurs axes de révolution soient confondus. La deuxième chambre 10 comprend une ouverture centrale circulaire pour permettre le passage d'un axe 17 du rotor 5. Les deux chambres 8, 10 enserrent le premier stator 4a et le deuxième stator 4b, qui eux-mêmes enserrent le rotor 5. Le réducteur 3 est un réducteur à axes parallèles comportant deux étages 12, 13 de réduction. Le moteur électrique 2 est placé dans un premier carter 14 et le réducteur 3 est placé dans un deuxième carter 15, lesdits deux carters 14, 15 étant accolés l'un à l'autre de façon étanche.

En se référant aux figures 2 et 3, pour ce premier mode de réalisation d'un groupe motopropulseur 1 selon l'invention, un circuit de circulation d'huile est créé entre le réducteur 3 et le moteur électrique 2.

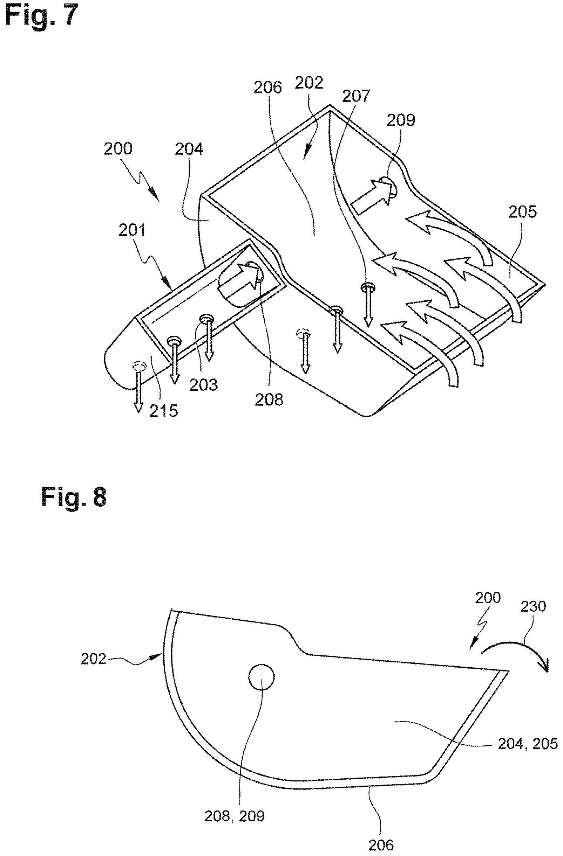

En se référant aux figures 7 et 8, ce circuit de circulation d'huile comprend un organe de distribution 200 d'huile placé dans une zone supérieure 16 du réducteur 3. Cet organe de distribution 200 est une pièce solide comprenant schématiquement une gouttière 201 ouverte et allongée, et une cuve 202 creuse. La gouttière 201 est munie d'un fond 215 percé de plusieurs orifices 203 alignés suivant un axe longitudinal de ladite gouttière 201, et la cuve 202 est délimitée par deux parois latérales parallèles 204, 205 et par un fond 206 profilé reliant lesdites deux parois latérales 204, 205. Le fond 206 de cette cuve 202 est percé de plusieurs orifices 207 alignés suivant un axe reliant perpendiculairement les deux parois latérales parallèles 204, 205. Parmi les deux parois latérales 204, 205, une première paroi latérale 204 est dotée d'une ouverture 208, et la gouttière 201 débouche dans ladite première paroi latérale 204 dans la continuité de cette ouverture 208 de façon à assurer une communication fluidique entre ladite gouttière 201 et ladite paroi latérale 204. Parmi les deux parois latérales 204, 205, une deuxième paroi 205 est dotée d'une ouverture 209 qui est sensiblement alignée sur l'ouverture 208 de la première paroi 204 suivant un axe perpendiculaire auxdites deux parois 204, 205.

En se référant à la figure 3, le premier mode de réalisation d'un groupe motopropulseur 1 selon l'invention, met en œuvre une poche 18 d'huile sous la forme d'un disque creux 19 possédant une ouverture centrale 20, ledit disque creux 19 délimitant une chambre annulaire 20. Ce disque creux 19 est placé entre le moteur électrique 2 et le réducteur 3. Plus précisément entre la deuxième chambre 10 de refroidissement du moteur électrique 2 et une paroi 21 d'interface du carter 15 du réducteur 3, séparant ledit moteur électrique 2 et ledit réducteur 3. La deuxième chambre de refroidissement 10 et le disque creux 19 ont sensiblement le même diamètre et sont disposés entre le moteur électrique et le réducteur de sorte que leurs axes de révolution soient confondus. L'ouverture centrale 20 du disque creux 19 permet le passage de l'axe 17 du rotor 5. Le disque creux 19 comprend un orifice supérieur dans lequel débouche un embout supérieur 22 et un orifice inférieur dans lequel débouche un embout inférieur 23, lesdits orifices étant circulaires et le diamètre de l'orifice supérieur étant supérieur au diamètre de l'orifice inférieur. Le disque creux 19 comprend également un orifice de mise à l'air placé à côté de l'orifice supérieur, et dans lequel débouche un embout 24 de mise à l'air.

Le disque creux 19 est disposé entre le moteur électrique 2 et le réducteur 3, en étant fixé sur le carter 15 du réducteur 3. Le système peut être assemblé sur le réducteur 3 lors du montage de celui-ci, afin de faciliter les raccordements des embouts 22,23,132,133 et assurer l'étanchéité entre embouts et carter réducteur. L'organe de distribution 200 est disposé dans le réducteur 3, de sorte que :
- l'embout supérieur 22 du disque creux 19 matérialisant la poche d'huile 18 soit placé au-dessus de l'embout inférieur 23.
- l'embout supérieur 22 du disque creux 19 se place dans la continuité de l'ouverture 209 de la deuxième paroi 205 de l'organe de distribution 200 délimitant la cuve 202,
- l'embout inférieur 23 du disque creux 19 débouche dans une zone inférieure 25 du réducteur 3.

Il est supposé que la paroi d'interface 21 du carter 15 du réducteur 3 possède des ouvertures ainsi qu'un système d'étanchéité permettant le passage de l'embout supérieur 22 et de l'embout inférieur 23 du disque creux 19 afin d'assurer une circulation d'huile entre la poche d'huile 18 délimitée par le disque creux 19 et le réducteur 3.

Le principe de fonctionnement d'un tel groupe motopropulseur 1 comprend une étape de projection de l'huile assurée par la couronne de différentiel 30 du réducteur 3, vers l'organe de distribution 200 de l'huile placé dans une zone supérieure 16 du carter 15 du réducteur 3. L'organe de distribution 200 va alors engendrer trois flux d'huile :
- un premier flux réalisé par l'ouverture 209 de la deuxième paroi latérale 205 de la cuve 202 et destiné à alimenter la poche d'huile 18 via l'embout supérieur 22,
- un deuxième flux réalisé à partir des orifices 203 de la gouttière 201 et des orifices 207 du fond 206 de la cuve 202, et destiné à lubrifier des engrenages et autres composants,
- un troisième flux réalisé par un débordement d'huile de la cuve 202 comme matérialisé par la flèche 230 de la figure 8, et apte à lubrifier des composants internes du réducteur 3.

Le premier flux permet à l'huile de circuler dans le disque creux 19 délimitant la poche d'huile 18, cette circulation étant favorisée par une mise à l'air de ce disque creux 19, assurée par l'embout 24 de mise à l'air. L'huile circulant dans la poche 18 pourra être chauffée par la deuxième chambre de refroidissement 10, dont le fluide de refroidissement aura été préalablement chauffé par le moteur électrique 2. Elle peut également être refroidie par ledit fluide de refroidissement, si la température de l'huile du réducteur 3 venait à excéder la température du fluide de refroidissement du moteur 2. Dans ce cas de figure, le système évite une surchauffe du réducteur 3. L'huile ressort ensuite du disque creux 19 par l'embout inférieur 23 pour être acheminée vers une zone inférieure du réducteur 3. L'huile circule dans la poche 18 par gravité entre l'embout supérieur 22 et l'embout inférieur 23. Le diamètre de l'orifice supérieur et le diamètre de l'orifice inférieur sont calibrés de manière à définir un temps de remplissage prédéfini de la poche 18.

Il peut être envisagé de placer une électrovanne à la sortie du disque creux 19 matérialisant la poche d'huile 18.

En effet, l'objectif est de permettre un pilotage du remplissage / vidange de la poche 18 à huile de manière à maitriser le niveau d'huile dans le réducteur 3, quelles que soient les conditions de roulages.

Une gestion du niveau d'huile dans le réducteur 3 par un simple calibrage des orifices entrée et de sortie de la poche 18 d'huile n'est possible qu'en régime stabilisé. En effet, lors d'une phase de roulage en ville, dès que le véhicule est à l'arrêt, ou en vitesse lente, le débit d'huile à l'entrée de la poche 18 devient faible ou nul, car la couronne de différentiel ne projette plus d'huile. La poche 18 se vide, et il y aura de nouveau un volume d'huile plus important que nécessaire dans le réducteur 3 au redémarrage, générant des pertes par frottement. On retrouve ce phénomène sur un profil de route type montagne ou petite route de campagne, avec une vitesse de véhicule qui varie de façon importante. Les virages et la pente vont également influer sur le débit d'huile à l'entrée de la poche 18. L'état non stabilisé dû à ces profils de routes, va engendrer la vidange de la poche 18 d'huile par gravité, et un volume d'huile plus important que souhaité dans le réducteur. L'électrovanne pourra ainsi être activée à des moments précis de la phase de roulage du véhicule, de façon à obtenir un volume d'huile adapté dans le réducteur 3 à chaque instant de roulage du véhicule.

Grâce à l'instauration de ce système de circulation d'huile, il va être possible :
- de mettre une quantité d'huile dans le réducteur 3 qui garantit une bonne lubrification au démarrage, et
- de faire baisser la quantité d'huile progressivement quand la lubrification des composants est établie.

Par ailleurs, l'huile qui circule dans la poche 18, va être réchauffée par les calories à dissiper dans la deuxième chambre 10 de refroidissement d'eau, et ainsi réduire la viscosité de l'huile. Au travers de ces deux actions, le système de circulation d'huile mis en œuvre dans le cadre d'un groupe motopropulseur 1 selon l'invention permet d'améliorer le rendement du réducteur.

En se référant à la figure 4, un deuxième mode de réalisation d'un groupe motopropulseur 100 selon l'invention, comprend un moteur électrique 102 à flux radial. Il s'agit d'un moteur électrique 102 de type rotor/stator. Le refroidissement du moteur 102 électrique est réalisé avec un fluide de refroidissement qui peut par exemple être de l'eau, ledit refroidissement étant réalisé par un circuit de refroidissement 106 placé à sa périphérie. Le circuit de refroidissement 106 comprend essentiellement une chambre périphérique 108 de forme cylindrique et placée autour du stator 104, ledit stator 104 étant placé autour du rotor 105. Ce circuit de refroidissement 106 comprend une entrée 107 débouchant dans la chambre périphérique 108 et une sortie 111 prenant naissance sur ladite chambre périphérique 108 et acheminant le fluide de refroidissement vers une chambre de refroidissement, comme décrit ci-après..

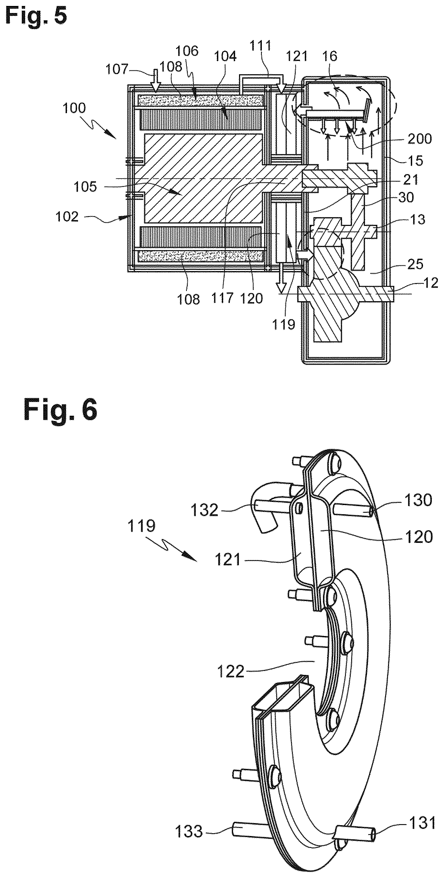

En se référant aux figures 5 et 6, pour ce deuxième mode de réalisation d'un groupe motopropulseur 100 selon l'invention, un circuit de circulation d'huile est créé entre le réducteur 3 et le moteur électrique 2, à l'identique de celui qui a été créé pour le premier mode de réalisation.

Pour bien résumer la situation, le réducteur 3 et le circuit de circulation d'huile entre ledit réducteur 3 et le moteur électrique 2, 102 sont identiques entre le premier mode de réalisation et le deuxième mode de réalisation, seul le moteur électrique 2, 102 diffère entre ces deux modes de réalisation.

Pour ce deuxième mode de réalisation 1, puisque la deuxième chambre 10 de refroidissement du premier mode de réalisation et contre laquelle est destinée à venir en appui la poche 18 d'huile, n'existe pas en raison de la conformation du circuit de refroidissement 106 lié à la structure d'un tel moteur électrique 102, il faut donc la créer de toute pièce pour avoir un circuit de circulation d'huile analogue à celui du premier mode de réalisation 1.

En se référant aux figures 5 et 6, il faut donc insérer un disque creux 119 possédant deux compartiments 120, 121, dont un premier compartiment 120 va recréer une chambre de refroidissement annulaire identique à celle 10 du premier mode de réalisation, et dont un deuxième compartiment 121 va délimiter une chambre annulaire qui sera assimilable à la poche d'huile 18 du premier mode de réalisation. Ce disque creux 119 possède une ouverture centrale 122 destinée au passage d'un axe 117 du rotor 105. Les deux chambres annulaires délimitées par les deux compartiments 120, 121 du disque creux 119 ont sensiblement le même diamètre extérieur.

La sortie 111 du circuit de refroidissement 106 débouche dans le premier compartiment 120 du disque creux pour créer une chambre de refroidissement qui sera accolée au deuxième compartiment 121 qui constituera la poche d'huile.

En se référant à la figure 6, la chambre de refroidissement comprend une arrivée 130 d'eau et une sortie d'eau 131. De même, la poche d'huile 121 possède également une arrivée d'huile 132 et une sortie d'huile 133.

Une fois que ce disque creux119 à double compartiment 120, 121 aura été placé dans sa position définitive entre le moteur 102 et le réducteur 3, toutes les caractéristiques structurelles et de fonctionnement de la circulation d'huile entre ledit moteur 102 et ledit réducteur 3 sont en tout point identiques à celles décrites pour le premier mode de réalisation.

## Revendications

1. Groupe motopropulseur (1, 100) d'un véhicule électrique comprenant un moteur électrique (2, 102) et un réducteur (3) de vitesse comprenant une couronne de différentiel (30), **caractérisé en ce que** le réducteur (3) de vitesse comprend un organe de distribution (200) destinée à récupérer de l'huile qui est projetée par la couronne de différentiel (200), et **en ce que** le groupe motopropulseur (1, 100) comprend un disque creux (19, 121) de circulation d'huile placé entre des faces d'accouplement (21) du moteur (2, 102) et du réducteur (3), ledit disque (19, 121) étant doté d'un orifice d'entrée (22, 132) et d'un orifice de sortie (23, 133) d'huile en communication avec le réducteur (3), l'une des faces dudit disque creux (19, 121) étant en contact avec une face d'une chambre de refroidissement (10, 120) du moteur électrique (2, 102), et l'organe de distribution (200) créant un premier flux d'huile vers l'orifice d'entrée (22, 132) du disque creux (19, 121) afin d'alimenter en huile ledit disque creux (19, 121).

2. Groupe motopropulseur selon la revendication 1, **caractérisé en ce que** l'organe de distribution (200) est placé dans une zone supérieure (16) du réducteur (3) de vitesse, et **en ce que** l'orifice de sortie (23, 133) est placé sous l'orifice d'entrée (22, 132), de sorte que l'huile transite par gravité dans le disque (19, 121) entre l'orifice d'entrée (22-132) et l'orifice de sortie (23-133).

3. Groupe motopropulseur selon l'une quelconque des revendications 1 ou 2, **caractérisé en ce que** le disque creux (19, 121) est annulaire, et **en ce que** la face de refroidissement est une face d'un disque annulaire de refroidissement (10, 120) dans lequel circule un liquide de refroidissement, les deux disques (19, 121, 10, 120) étant coaxiaux et placés au contact l'un de l'autre.

4. Groupe motopropulseur selon la revendication 3, **caractérisé en ce que** le diamètre du disque (19, 121) de circulation d'huile et le diamètre du disque (10, 120) de circulation du liquide de refroidissement sont sensiblement égaux.

5. Groupe motopropulseur selon l'une quelconque des revendications 3 ou 4, **caractérisé en ce que** le disque creux (121) de circulation d'huile et le disque creux (120) de circulation de liquide de refroidissement sont préalablement assemblés pour constituer un disque résultant rapporté pouvant être directement intégré tel quel, dans ledit groupe motopropulseur (100).

6. Groupe motopropulseur selon l'une quelconque des revendications 1 à 5, **caractérisé en ce que** le diamètre de l'orifice d'entrée (22, 132) est supérieur au diamètre de l'orifice de sortie (23, 133)) d'huile.

7. Groupe motopropulseur selon l'une quelconque des revendications 1 à 6, **caractérisé en ce qu'**une électrovanne de pilotage est placée au niveau de l'orifice de sortie (23, 133) d'huile du disque de circulation d'huile (19, 121) de façon à gérer la circulation d'huile dans le disque en régime non stabilisé.

8. Groupe motopropulseur selon l'une quelconque des revendications 1 à 7, **caractérisé en ce que** l'organe de distribution (200) est une pièce mécanique profilée présentant un orifice (209) placé dans la continuité de l'orifice d'entrée (22, 132) d'huile.

9. Groupe motopropulseur selon la revendication 8, **caractérisé en ce que** l'organe de distribution (200) comprend une multiplicité de premiers orifices (203, 207) destinés à créer un deuxième flux d'huile vers des engrenages ou autres composants.

10. Groupe motopropulseur selon l'une quelconque des revendications 8 ou 9, **caractérisé en ce que** l'organe de distribution (200) permet de créer un troisième flux d'huile vers des composants internes du réducteur (3) par un débordement (230) de l'huile dudit organe de distribution (200).

## Patentansprüche

1. Antriebsstrang (1, 100) eines Elektrofahrzeugs, umfassend einen Elektromotor (2, 102) und ein Getriebe (3), das einen Differenzialkranz (30) umfasst, **dadurch gekennzeichnet, dass** das Getriebe (3) ein Verteilungsorgan (200) umfasst, das dazu bestimmt ist, Öl zurückzugewinnen, das von dem Differenzialkranz (200) weggeschleudert wird, und dass der Antriebsstrang (1, 100) eine hohle Scheibe (19, 121) zur Zirkulation von Öl umfasst, die zwischen Kupplungsflächen (21) des Motors (2, 102) und des Getriebes (3) angeordnet ist, wobei die Scheibe (19, 121) mit einer Eintrittsöffnung (22, 132) und mit einer Austrittsöffnung (23, 133) für Öl in Verbindung mit dem Getriebe (3) ausgestattet ist, wobei eine der Flächen der hohlen Scheibe (19, 121) in Kontakt mit einer Fläche einer Kühlkammer (10, 120) des Elektromotors (2, 102) steht und wobei das Verteilungsorgan (200) eine erste Ölströmung zu der Eintrittsöffnung (22, 132) der hohlen Scheibe (19, 121) hin erzeugt, um die hohle Scheibe (19, 121) mit Öl zu versorgen.

2. Antriebsstrang nach Anspruch 1, **dadurch gekennzeichnet, dass** das Verteilungsorgan (200) in einem oberen Bereich (16) des Getriebes (3) angeordnet ist und dass die Austrittsöffnung (23, 133) unter der Eintrittsöffnung (22, 132) angeordnet ist, so dass das Öl in der Scheibe (19, 121) aufgrund der Schwerkraft zwischen der Eintrittsöffnung (22-132) und der Austrittsöffnung (23-133) verläuft.

3. Antriebsstrang nach einem der Ansprüche 1 oder 2, **dadurch gekennzeichnet, dass** die hohle Scheibe (19, 121) ringförmig ist und dass die Kühlfläche eine Fläche einer ringförmigen Kühlscheibe (10, 120) ist, in der eine Kühlflüssigzeit zirkuliert, wobei die beiden Scheiben (19, 121, 10, 120) koaxial sind und in Kontakt miteinander angeordnet sind.

4. Antriebsstrang nach Anspruch 3, **dadurch gekennzeichnet, dass** der Durchmesser der Scheibe (19, 121) zur Zirkulation von Öl und der Durchmesser der Scheibe (10, 120) zur Zirkulation der Kühlflüssigkeit im Wesentlichen gleich sind.

5. Antriebsstrang nach einem der Ansprüche 3 oder 4, **dadurch gekennzeichnet, dass** die hohle Scheibe (121) zur Zirkulation von Öl und die hohle Scheibe (120) zur Zirkulation von Kühlflüssigkeit zuvor zusammengebaut werden, um eine angesetzte resultierende Scheibe zu bilden, die als solche direkt in den Antriebsstrang (100) integriert werden kann.

6. Antriebsstrang nach einem der Ansprüche 1 bis 5, **dadurch gekennzeichnet, dass** der Durchmesser der Eintrittsöffnung (22, 132) größer als der Durchmesser der Austrittsöffnung (23, 133) für Öl ist.

7. Antriebsstrang nach einem der Ansprüche 1 bis 6, **dadurch gekennzeichnet, dass** ein Magnetventil zur Ansteuerung an der Austrittsöffnung (23, 133) für Öl der Scheibe zur Zirkulation von Öl (19, 121) angeordnet ist, so dass die Zirkulation von Öl in der Scheibe im nicht stabilisierten Betrieb gesteuert wird.

8. Antriebsstrang nach einem der Ansprüche 1 bis 7, **dadurch gekennzeichnet, dass** das Verteilungsorgan (200) ein profiliertes mechanisches Teil ist, das eine Öffnung (209) aufweist, die in der Fortführung der Eintrittsöffnung (22, 132) für Öl angeordnet ist.

9. Antriebsstrang nach Anspruch 8, **dadurch gekennzeichnet, dass** das Verteilungsorgan (200) eine Mehrzahl von ersten Öffnungen (203, 207) umfasst, die dazu bestimmt sind, eine zweite Ölströmung zu Zahnrädern oder anderen Komponenten hin zu erzeugen.

10. Antriebsstrang nach einem der Ansprüche 8 oder 9, **dadurch gekennzeichnet, dass** das Verteilungsorgan (200) es ermöglicht, eine dritte Ölströmung zu internen Komponenten des Getriebes (3) hin durch einen Überlauf (230) für Öl des Verteilungsorgans (200) zu erzeugen.

## Claims

1. Power unit (1, 100) of an electric vehicle comprising an electric motor (2, 102) and a reduction gearbox (3) comprising a differential ring gear (30), **characterized in that** the reduction gearbox (3) comprises a distribution member (200) for recovering oil sprayed by the differential ring gear (200), and **in that** the power unit (1, 100) comprises a hollow oil circulation disk (19, 121) placed between coupling faces (21) of the motor (2, 102) and of the reduction gearbox (3), said disk (19, 121) being provided with an inlet hole (22, 132) and an outlet hole (23, 133) for oil in communication with the reduction gearbox (3), one of the faces of said hollow disk (19, 121) being in contact with a face of a cooling chamber (10, 120) of the electric motor (2, 102), and the distribution member (200) creating a first flow of oil toward the inlet hole (22, 132) of the hollow disk (19, 121) in order to supply said hollow disk (19, 121) with oil.

2. Power unit according to Claim 1, **characterized in that** the distribution member (200) is placed in an upper zone (16) of the reduction gearbox (3), and **in that** the outlet hole (23, 133) is placed under the inlet hole (22, 132), such that the oil travels by gravity inside the disk (19, 121) between the inlet hole (22-132) and the outlet hole (23-133).

3. Power unit according to either one of Claims 1 and 2, **characterized in that** the hollow disk (19, 121) is annular, and **in that** the cooling face is a face of an annular cooling disk (10, 120) inside which a coolant liquid circulates, the two disks (19, 121, 10, 120) being coaxial and placed in contact with one another.

4. Power unit according to Claim 3, **characterized in that** the diameter of the oil circulation disk (19, 121) and the diameter of the coolant liquid circulation disk (10, 120) are substantially equal.

5. Power unit according to either one of Claims 3 and 4, **characterized in that** the hollow oil circulation disk (121) and the hollow coolant liquid circulation disk (120) are assembled beforehand to constitute a resulting added disk, which may be directly integrated as such into said power unit (100).

6. Power unit according to any one of Claims 1 to 5, **characterized in that** the diameter of the inlet hole (22, 132) is greater than the diameter of the outlet hole (23, 133) for oil.

7. Power unit according to any one of Claims 1 to **6, characterized in that** a solenoid control valve is placed at the oil outlet hole (23, 133) of the oil circulation disk (19, 121) so as to manage the circulation of oil in the disk in non-stabilized conditions.

8. Power unit according to any one of Claims 1 to 7, **characterized in that** the distribution member (200) is a profiled mechanical part having a hole (209) placed in continuity with the oil inlet hole (22, 132).

9. Power unit according to Claim 8, **characterized in that** the distribution member (200) comprises a multiplicity of first holes (203, 207) intended to create a second flow of oil toward gears or other components.

10. Power unit according to either one of Claims 8 and 9, **characterized in that** the distribution member (200) makes it possible to create a third flow of oil toward internal components of the reduction gearbox (3) by an overflow (230) of oil from said distribution member (200).
